# EUROPEAN PATENT APPLICATION

(11) **EP 4 610 106 A1**
(43) Date of publication of application: **03.09.2025**
(21) Application number: 23882361.1
(22) Date of filing: 03.10.2023
(51) Int. Cl.: B60Q 1/08, B60Q 1/04, B60Q 1/14, G06V 10/25, G06V 20/58, G06V 20/56

(54) **VEHICLE DETECTION DEVICE, LIGHT DISTRIBUTION CONTROL DEVICE, AND VEHICLE DETECTION METHOD**

(30) Priority: 28.10.2022 JP 2022173067
(71) Applicant: Koito Manufacturing Co., Ltd., Shinagawa-ku, Tokyo 141-0001 (JP)
(72) Inventor: KATAOKA, Takuya, Shizuoka-shi Shizuoka 424-8764 (JP); SUMITANI, Hiroki, Shizuoka-shi Shizuoka 424-8764 (JP)
(74) Representative: Algemeen Octrooi- en Merkenbureau B.V.
(86) International application number: PCT/JP2023/036026
(87) International publication number: WO 2024/090152

(57) **Abstract**

A vehicle detection device (6) performs detection of a vehicle in front within a processing region (ROI) set in an image (IMG) based on an imaging device (4) and displaces or transforms the processing region (ROI) based on a change in shape of a road in front.

## Description

### TECHNICAL FIELD

The present invention relates to a vehicle detection device, a light distribution control device, and a vehicle detection method.

### BACKGROUND ART

There has been proposed ADB (Adaptive Driving Beam) control in which a light distribution pattern is dynamically and adaptively controlled based on the surrounding conditions of the vehicle. In ADB control, a camera is used to detect whether or not there is a vehicle in front to which light irradiation with high luminance should be avoided, and a region corresponding to the vehicle in front is shaded from light (see Patent Literature 1, for example). By shading the region corresponding to the vehicle in front from light, the glare given to the driver of the vehicle in front can be reduced, and the visibility from the driver of the subject vehicle can be improved.

### RELATED-ART LITERATURE

### PATENT LITERATURE

Patent Literature 1: Japanese Unexamined Patent Application Publication No. 2015-064964

### SUMMARY OF INVENTION

### TECHNICAL PROBLEM

In implementing ADB control, detecting a vehicle in front with high accuracy is desired. As a result of intensive study regarding the technology for detecting a vehicle in front, the inventors have found that the detection accuracy for a vehicle in front may decrease when the shape of the road in front of the subject vehicle changes.

The present invention has been made in view of such a situation, and a purpose thereof is to provide a technology for improving the detection accuracy for a vehicle in front.

### SOLUTION TO PROBLEM

To solve the problem above, one embodiment of the present invention is a vehicle detection device. The vehicle detection device: performs detection of a vehicle in front within a processing region set in an image based on an imaging device that captures an image of an area in front; and displaces or transforms the processing region based on a change in shape of a road in front.

Another embodiment of the present invention is a light distribution control device. The light distribution control device determines a light distribution pattern including a shading part in a region corresponding to a vehicle in front, based on a detection result from the vehicle detection device according to the abovementioned embodiment.

Yet another embodiment of the present invention is a vehicle detection method. The vehicle detection method includes: performing detection of a vehicle in front within a processing region set in an image based on an imaging device that captures an image of an area in front; and displacing or transforming the processing region based on a change in shape of a road in front.

Still yet another embodiment of the present invention is a light distribution control device that determines a light distribution pattern including a shading part using an image based on an imaging device that captures an image of an area in front. When the shape of a road in front is a predetermined first shape, the light distribution control device sets the shading part for a light spot included in a first region of the image and does not set the shading part for a light spot included in a second region different from the first region. When the shape of the road is a second shape different from the first shape, the light distribution control device sets or does not set the shading part for a light spot included in the first region and sets the shading part for a light spot included in the second region.

Optional combination of the aforementioned constituting elements, and methods, devices, systems, and the like among which expressions in the present invention are transformed are also effective as embodiments of the present invention.

### ADVANTAGEOUS EFFECTS OF INVENTION

According to the present invention, the detection accuracy for a vehicle in front can be improved.

### BRIEF DESCRIPTION OF DRAWINGS

[FIG. 1] FIG. 1 is a block diagram of a vehicular lamp system;
[FIGS. 2] FIG. 2A, FIG. 2B, FIG. 2C, and FIG. 2D are diagrams that illustrate basic operation of vehicle detection and light distribution control;
[FIGS. 3] FIG. 3A, FIG. 3B, FIG. 3C, and FIG. 3D are diagrams that illustrate a case where the basic operation is performed in a situation where the shape of the road in front changes from straight to curved;
[FIGS. 4] FIG. 4A, FIG. 4B, FIG. 4C, and FIG. 4D are diagrams that illustrate displacement of a processing region based on the road shape;
[FIGS. 5] FIG. 5A, FIG. 5B, FIG. 5C, and FIG. 5D are diagrams that illustrate transformation of the processing region based on the road shape;
[FIGS. 6] FIG. 6A is a diagram that illustrates transformation of the processing region based on the tilt of the subject vehicle; FIG. 6B is a diagram that illustrates displacement of the processing region based on the tilt of the subject vehicle; and
[FIG. 7] FIG. 7 is a flowchart that shows an example of control performed by a vehicle detection device and a light distribution control device.

### DESCRIPTION OF EMBODIMENTS

In the following, the present invention will be described based on a preferred embodiment with reference to the drawings. The embodiment is intended to be illustrative only and not to limit the invention, so that it should be understood that not all of the features or combinations thereof described in the embodiments are necessarily essential to the invention. Like reference characters denote like or corresponding constituting elements, members, and processes in each drawing, and repetitive description will be omitted as appropriate. Also, the scale or shape of each component shown in each drawing is defined for the sake of convenience to facilitate the explanation and is not to be regarded as limitative unless otherwise specified. Also, when the terms "first", "second", and the like are used in the present specification or claims, such terms do not imply any order or degree of importance and are used to distinguish one configuration from another, unless otherwise specified. Further, in each drawing, part of a member less important in describing the embodiments may be omitted.

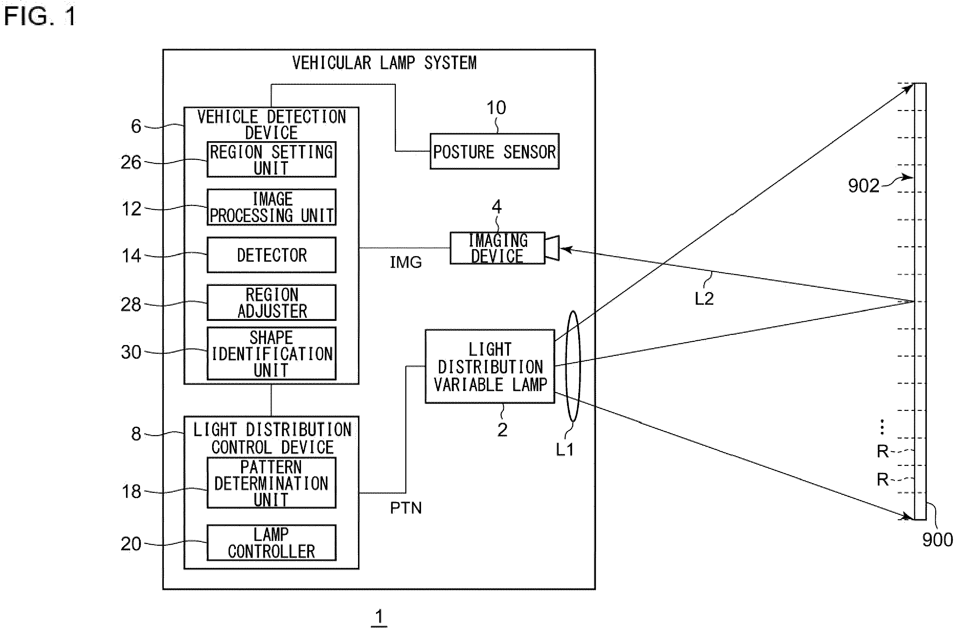

FIG. 1 is a block diagram of a vehicular lamp system 1. In FIG. 1, constituting elements of the vehicular lamp system 1 are illustrated as functional blocks. Each of the functional blocks may be implemented by an element such as a CPU or memory of a computer or by a circuit as a hardware configuration, and by a computer program or the like as a software configuration. It will be understood by those skilled in the art that these functional blocks may be implemented in a variety of forms by combinations of hardware and software.

The vehicular lamp system 1 includes a light distribution variable lamp 2, an imaging device 4, a vehicle detection device 6, a light distribution control device 8, and a posture sensor 10. These are mounted on a vehicle. In the present embodiment, the vehicle on which the vehicular lamp system 1 is mounted is, for example, a saddle riding type vehicle such as a motorcycle. The light distribution variable lamp 2, the imaging device 4, the vehicle detection device 6, the light distribution control device 8, and the posture sensor 10 may all be installed in the same housing, or some members may be provided outside the housing.

For example, the light distribution variable lamp 2, the imaging device 4, the vehicle detection device 6, the light distribution control device 8, and the posture sensor 10 may be housed in a lamp chamber. The lamp chamber is defined by a lamp body having an opening on the front side of the vehicle, and a translucent cover attached to cover the opening of the lamp body. The imaging device 4, the vehicle detection device 6, the light distribution control device 8, and the posture sensor 10 may be arranged outside the lamp chamber, such as on the vehicle side. In this case, the imaging device 4 may be a vehicle-mounted camera. Also, the vehicle detection device 6 and the light distribution control device 8 may be entirely or partially constituted by a vehicle ECU, for example.

The light distribution variable lamp 2 can irradiate a visible light beam L1 having a variable intensity distribution to a region in front of the subject vehicle. The light distribution variable lamp 2 can individually change the illuminance of light emitted to each of multiple individual regions R arranged in the region in front. In other words, the light distribution variable lamp 2 can irradiate, to a space in front of the subject vehicle, light with illuminance that varies depending on the location (individual region R). The multiple individual regions R are arranged in a matrix, for example. The light distribution variable lamp 2 receives information indicating a light distribution pattern PTN from the light distribution control device 8 and emits the visible light beam L1 having an intensity distribution corresponding to the light distribution pattern PTN. Accordingly, the light distribution pattern PTN is formed in front of the subject vehicle. The light distribution pattern PTN is recognized as a two-dimensional illuminance distribution of an irradiation pattern 902 formed by the light distribution variable lamp 2 on a virtual vertical screen 900 in front of the subject vehicle.

The configuration of the light distribution variable lamp 2 is not particularly limited and may include, for example, multiple light sources arranged in a matrix and a lighting circuit that drives and turns on each light source independently. Preferred examples of the light sources include semiconductor light sources, such as LEDs (light emitting diodes), LDs (laser diodes), and organic or inorganic EL (electroluminescence). The individual regions R are associated respectively with the light sources, and light is emitted from each light source to the corresponding individual region R. The resolution of the light distribution variable lamp 2, i.e., the light distribution resolution, may be from 1000 pixels to 2 million pixels, for example. The resolution of the light distribution variable lamp 2 means the number of unit regions in which the illuminance can be changed independently in the light distribution pattern PTN.

In order to form an illuminance distribution based on the light distribution pattern PTN, the light distribution variable lamp 2 may include a matrix-type pattern-forming device, such as a DMD (Digital Mirror Device) or a liquid crystal device, or a scanning optical-type pattern-forming device that scans an area in front of the subject vehicle using the light from a light source. Also, the light distribution variable lamp 2 may be configured to partially block light irradiation to a region in front using a shade plate.

The imaging device 4 may be a camera, for example, and is sensitive to visible light regions and repeatedly captures images of a region in front of the subject vehicle. The imaging device 4 captures an image of reflected light L2 of the visible light beam L1 caused by an object in front of the vehicle. The imaging device 4 also captures an image of light emitted by a vehicle in front, including a preceding vehicle and an oncoming vehicle. An image IMG generated by the imaging device 4 is transmitted to the vehicle detection device 6.

The image IMG acquired by the vehicle detection device 6 from the imaging device 4 may be RAW image data or may be image data to which predetermined image processing has been applied by the imaging device 4. The case where the vehicle detection device 6 receives image data obtained when a processing device other than the imaging device 4 applies image processing to RAW image data generated by the imaging device 4 also corresponds to the acquisition of an image IMG from the imaging device 4. In the following description, an "image IMG based on the imaging device 4" means that it can be either RAW image data or data to which image processing has been applied. Also, both image data may be expressed as the "image IMG" without distinguishing between them.

The vehicle detection device 6 detects a vehicle in front using an image IMG based on the imaging device 4. The vehicle detection device 6 transmits the detection result to the light distribution control device 8. The vehicle detection device 6 may also detect an object other than a vehicle in front. The vehicle detection device 6 can be constituted by a digital processor. For example, the vehicle detection device 6 may be constituted by a combination of a microcontroller, including a CPU, and a software program or may be constituted by an FPGA (Field Programmable Gate Array) or an ASIC (Application Specified IC). As an example, the vehicle detection device 6 includes a region setting unit 26, an image processing unit 12, a detector 14, a region adjuster 28, and a shape identification unit 30. Each component operates when the integrated circuit constituting itself executes a program retained in the memory. The operation of each component will be described later.

The light distribution control device 8 performs ADB control for dynamically and adaptively controlling the light distribution of the light distribution variable lamp 2 depending on an object present in a region in front. The light distribution control device 8 of the present embodiment determines the light distribution pattern PTN that includes a shading part in a region corresponding to a vehicle in front, based on the detection result from the vehicle detection device 6. The "region corresponding to a vehicle in front" in the present embodiment is a region that overlaps the vehicle in front when the light distribution pattern PTN is projected in front.

The light distribution control device 8 transmits information indicating the light distribution pattern PTN to the light distribution variable lamp 2. The light distribution control device 8 can be constituted by a digital processor. For example, the light distribution control device 8 may be constituted by a combination of a microcontroller, including a CPU, and a software program or may be constituted by an FPGA (Field Programmable Gate Array) or an ASIC (Application Specified IC). As an example, the light distribution control device 8 includes a pattern determination unit 18 and a lamp controller 20. Each component operates when the integrated circuit constituting itself executes a program retained in the memory. The operation of each component will be described later.

The posture sensor 10 measures the tilt in the left and right directions of the subject vehicle, i.e., the tilt angle of the vehicle's lateral axis with respect to a horizontal line or a vertical line (in other words, the tilt angle of the vehicle's vertical axis with respect to a horizontal line or a vertical line). The posture sensor 10 is constituted by, for example, a publicly-known inertial measurement unit (IMU) or the like. The posture sensor 10 transmits the measurement result to the vehicle detection device 6.

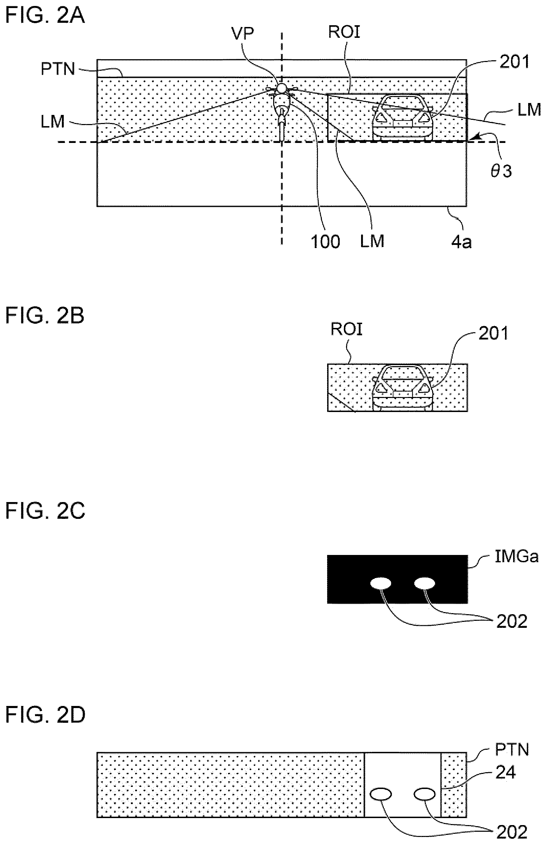

There will now be described the operation of the vehicle detection device 6 and the light distribution control device 8. FIG. 2A, FIG. 2B, FIG. 2C, and FIG. 2D are diagrams that illustrate basic operation of vehicle detection and light distribution control. FIG. 2A shows a subject vehicle 100, an imaging region 4a of the imaging device 4, and the light distribution pattern PTN formed in a region in front. Here, a high-beam light distribution pattern is shown as an example of the light distribution pattern PTN. Also, a processing region ROI is shown in each figure for convenience to indicate the positional relationship of the processing region ROI with respect to the image IMG (or the imaging region 4a). In the following description, an oncoming vehicle 201 is set as an example of a vehicle in front.

When the oncoming vehicle 201 is present in the region in front of the subject vehicle 100, the image IMG that includes the oncoming vehicle 201 is generated by the imaging device 4 and transmitted to the vehicle detection device 6. The image IMG thus transmitted to the vehicle detection device 6 is acquired by the region setting unit 26. The region setting unit 26 sets the processing region ROI for the image IMG. The processing region ROI may be set by a device other than the vehicle detection device 6. The processing region ROI as an example has a rectangular shape that is long in a vehicle width direction and that has an upper side and a lower side extending in the left and right directions of the vehicle or image, and a left side and a right side extending in the vertical directions. When the shape of the road in front, on which the subject vehicle 100 is traveling, is a predetermined reference shape, the region setting unit 26 sets the processing region ROI in a reference range. The reference shape of the road is not particularly limited but may, for example, be straight and have the same slope as the road surface on which the subject vehicle 100 is located (hereinafter, referred to as "flat", as appropriate).

The processing region ROI as an example is set in a region where the oncoming vehicle 201 is expected to appear, so as to be used to detect the oncoming vehicle 201. As shown in FIG. 2A, when the shape of the road in front is the reference shape, the reference range in which the processing region ROI for the oncoming vehicle 201 is set is located on the opposite traffic lane side, with respect to the middle in a vehicle width direction of the subject vehicle. The processing region ROI may also be set in a region where a preceding vehicle is expected to appear, so as to be used to detect the preceding vehicle. Also, both the processing region ROI for the oncoming vehicle 201 and the processing region ROI for the preceding vehicle may be set.

Information on the reference range of the processing region ROI is retained in the region setting unit 26 in advance. The processing region ROI can be set in advance based on experiments and simulations conducted by the designer. The information on the reference range may be, for example, information in which the range of the processing region ROI and the pixel positions of the image IMG are associated with each other. The processing region ROI set by the region setting unit 26 may be subjected to displacement processing or transformation processing performed by the region adjuster 28, as will be described later. The image IMG with the processing region ROI set is transmitted to the image processing unit 12.

The image processing unit 12 extracts the processing region ROI from the image IMG, as shown in FIG. 2B. The image processing unit 12 then applies publicly-known image processing, such as binarization, to the processing region ROI. This generates a light spot image IMGa in which two light spots 202 corresponding to lamps of the oncoming vehicle 201 are extracted, as shown in FIG. 2C. The lamps of the oncoming vehicle 201 are headlamps or the like. When the object to be detected is a preceding vehicle, the light spot image IMGa includes light spots 202 corresponding to rear lamps or the like of the preceding vehicle. The rear lamps include stop lamps and tail lamps. The image processing unit 12 transmits the light spot image IMGa thus generated to the detector 14.

The detector 14 uses the light spot image IMGa to judge whether or not there is an oncoming vehicle 201. Performing vehicle detection in the light spot image IMGa generated from the processing region ROI corresponds to performing vehicle-in-front detection in the processing region ROI. When the light spot image IMGa includes a light spot 202, the detector 14 detects the oncoming vehicle 201 based on the light spot 202. For example, the detector 14 judges that a light spot 202 present in the processing region ROI originates from the oncoming vehicle 201, i.e., the oncoming vehicle 201 is present at the position of the light spot 202. The detector 14 transmits the detection result to the light distribution control device 8. The vehicle detection method implemented by the detector 14 is not particularly limited. For example, the generation of the light spot image IMGa may be omitted, and the oncoming vehicle 201 may be detected from the processing region ROI using a publicly-known method, including algorithm recognition and deep learning.

The detection result transmitted to the light distribution control device 8 is acquired by the pattern determination unit 18. When the oncoming vehicle 201 is detected, the pattern determination unit 18 sets a shading part 24 in a region corresponding to the oncoming vehicle 201 in a base light distribution pattern, as shown in FIG. 2D. Accordingly, the light distribution pattern PTN to be formed is determined. The shading part 24 is a portion in the light distribution pattern PTN where the luminance (illuminance) is 0 or a portion where the luminance is greater than 0 but reduced from before the shading. When the oncoming vehicle 201 is not detected, the pattern determination unit 18 sets a light distribution pattern PTN that does not include the shading part 24 in the region where the oncoming vehicle 201 is expected to appear.

The base light distribution pattern as an example is selected based on a light distribution mode that is determined based on the driver's instruction through operation of a light switch (not illustrated) or the like, the traveling state of the subject vehicle, the surrounding environment of the subject vehicle, and the like. For example, the light distribution mode includes a high-beam mode that forms a high-beam light distribution pattern, a low-beam mode that forms a low-beam light distribution pattern, and a town mode that forms a light distribution pattern suitable for traveling in urban areas. As an example, FIG. 2D shows the high-beam light distribution pattern. The pattern determination unit 18 transmits information on the light distribution pattern PTN thus determined to the lamp controller 20.

The lamp controller 20 instructs the light distribution variable lamp 2 to form the light distribution pattern PTN. The lamp controller 20 is constituted by, for example, a publicly-known LED driver module (LDM) or the like. When the dimming method for the light source of the light distribution variable lamp 2 is analog dimming, the lamp controller 20 adjusts the DC level of the drive current flowing through the light source. When the dimming method for the light source is PWM (Pulse Width Modulation) dimming, the lamp controller 20 adjusts an average level of the drive current by performing switching of the current flowing through the light source and adjusting the proportion of the ON period. Also, when the light distribution variable lamp 2 includes a DMD, the lamp controller 20 controls switching between ON and OFF states of each mirror element that constitutes the DMD. When the light distribution variable lamp 2 includes a liquid crystal device, the lamp controller 20 controls the light transmittance of the liquid crystal device. Thus, the light distribution pattern PTN is formed in front of the subject vehicle.

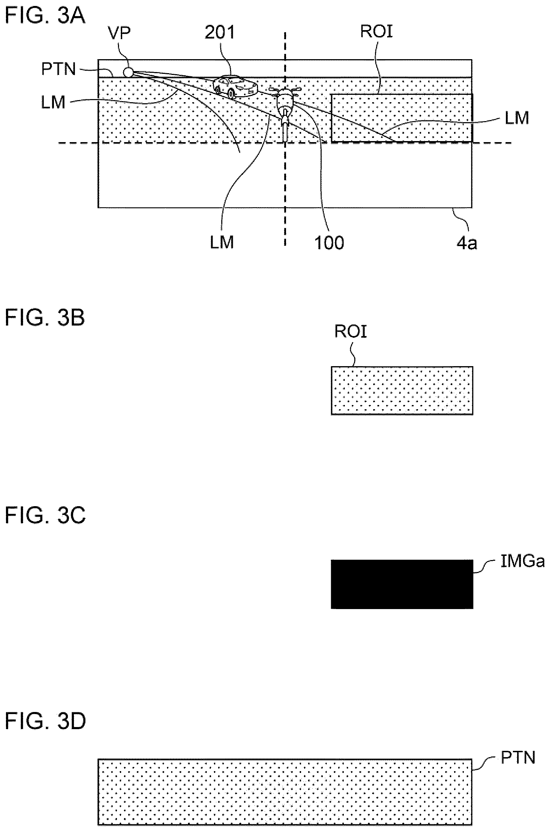

There will now be described the adjustment of the processing region ROI when the shape of the road in front on which the subject vehicle 100 is traveling changes. FIG. 3A, FIG. 3B, FIG. 3C, and FIG. 3D are diagrams that illustrate a case where the basic operation is performed in a situation where the shape of the road in front changes from straight to curved. As described previously, the vehicle detection device 6 performs detection of the oncoming vehicle 201 in the processing region ROI. In this control, when the shape of the road in front changes, the situation where the oncoming vehicle 201 cannot be detected may arise. Changes in road shape include a change in road curvature and a change in slope.

For example, it is assumed that the road curvature changes and the shape of the road in front changes from straight to curved, as shown in FIG. 3A. In this case, the region where the oncoming vehicle 201 is expected to appear also shifts in response to the change in road shape. Therefore, the processing region ROI in the reference range and the region where the oncoming vehicle 201 is expected to actually appear do not coincide with each other. Similarly, also when the road shape changes from curved to straight or when the road in front slopes upward or downward with respect to the road surface on which the subject vehicle 100 is located, the processing region ROI and the region where the oncoming vehicle 201 is expected to appear may not coincide with each other.

In this case, even if an oncoming vehicle 201 is present within the imaging region 4a, the lamps of the oncoming vehicle 201 may be located outside the processing region ROI, as shown in FIG. 3B. Accordingly, a light spot image IMGa that does not include a light spot 202 may be generated, as shown in FIG. 3C. In the vehicle detection using this light spot image IMGa, although the oncoming vehicle 201 is actually present, the oncoming vehicle 201 cannot be detected. As a result, as shown in FIG. 3D, a light distribution pattern PTN that does not include the shading part 24 is determined. Even if the detection of the oncoming vehicle 201 is performed without using the light spots 202, a change in road shape may cause the processing region ROI to deviate from the region where the oncoming vehicle 201 is expected to appear, so that the oncoming vehicle 201 may not be detected.

Therefore, the vehicle detection device 6 according to the present embodiment displaces or transforms the processing region ROI based on the change in shape of the road in front such as to reduce the deviation of the processing region ROI from the region where the oncoming vehicle 201 is expected to appear. The "transformation" in the present embodiment includes enlargement of the processing region ROI. Accordingly, the reduction of the area where the region where the oncoming vehicle 201 is expected to appear and the processing region ROI overlap can be suppressed. Therefore, missed detection of the oncoming vehicle 201 can be restrained.

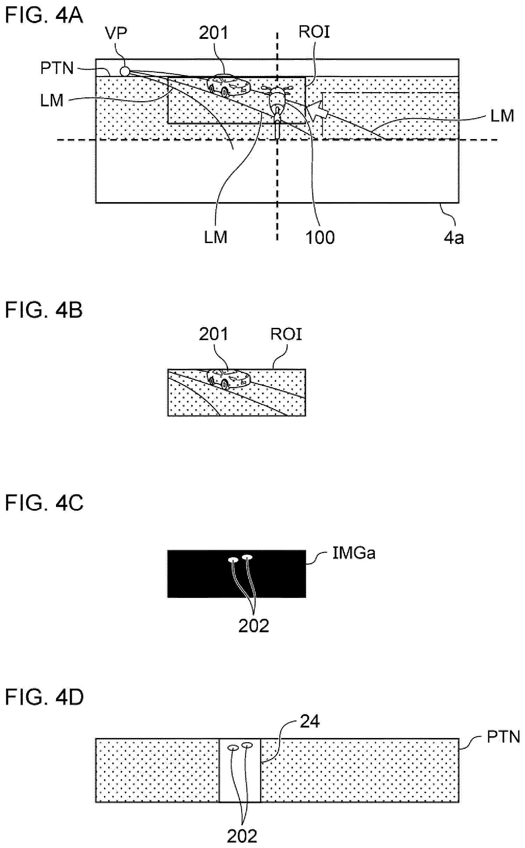

First, the case of displacing the processing region ROI will be described. FIG. 4A, FIG. 4B, FIG. 4C, and FIG. 4D are diagrams that illustrate displacement of the processing region ROI based on the road shape.

The image IMG transmitted to the vehicle detection device 6 is acquired by the shape identification unit 30. The shape identification unit 30 identifies the shape of the road in front based on the image IMG thus acquired. The shape identification unit 30 can detect a change in road shape based on transformation of a lane demarcation line LM, such as a white line on the road surface, for example. The shape identification unit 30 can extract a lane demarcation line LM by applying publicly-known image processing to the image IMG. For example, when the lane demarcation line LM is a straight line, the shape of the road in front can be identified as straight and flat. When the lane demarcation line LM is curved, the shape of the road in front can be identified as curved. When the lane demarcation line LM is bent, the shape of the road in front can be identified as inclined with respect to the road surface on which the subject vehicle 100 is located.

The shape identification unit 30 can also detect a change in road shape based on displacement of a vanishing point VP in the image IMG. The vanishing point VP is a point where the road on which the subject vehicle 100 is traveling converges in front. The shape identification unit 30 can extract the vanishing point VP by applying publicly-known image processing to the image IMG. The vanishing point VP can be identified based on, for example, the shape of a lane demarcation line LM obtained as a result of image processing or the shape of an electric wire extending along the road. For example, when the vanishing point VP is located at a position in the middle in a vehicle width direction and at a predetermined height, the shape of the road in front can be identified as straight and flat. When the vanishing point VP is deviated from the middle in a vehicle width direction to the left or right, the shape of the road in front can be identified as curved. When the vanishing point VP is deviated upward or downward from the predetermined height, the shape of the road in front can be identified as inclined with respect to the road surface on which the subject vehicle 100 is located.

The shape identification unit 30 transmits information on the road shape thus identified to the region adjuster 28. The information identified by the shape identification unit 30 may include the curvature and slope of the road. The curvature and slope can be calculated using a conventionally well-known method, based on the curvature or bending angle of a lane demarcation line LM, the position of the vanishing point VP, and the like. The region adjuster 28 instructs the region setting unit 26 to shift the processing region ROI to a position based on the road shape acquired from the shape identification unit 30.

For example, when the shape of the road in front is the reference shape, the processing region ROI is set in the reference range, as shown in FIG. 2A. Then, as shown in FIG. 2B to FIG. 2D, an oncoming vehicle 201 is detected using the processing region ROI set in the reference range. It is assumed that the shape of the road in front changes thereafter to a curve as shown in FIG. 4A.

When the shape identification unit 30 has detected the change in road shape to a curve, the region adjuster 28 specifies the range (position) of the processing region ROI such that the overlap (area) of the region where the oncoming vehicle 201 is expected to appear and the processing region ROI on the curved road is greater than when the processing region ROI is not adjusted. For example, the region adjuster 28 may retain a conversion table in advance in which the road curvature and the range of the processing region ROI are related to each other. The conversion table can be set as appropriate based on experiments and simulations conducted by the designer. Using this conversion table, the range of the processing region ROI based on the change in road curvature is identified. The region adjuster 28 transmits information on the range of the processing region ROI to the region setting unit 26.

The region setting unit 26 sets the processing region ROI in the range specified by the region adjuster 28. Accordingly, the processing region ROI set in the reference range shifts to the range specified by the region adjuster 28. In specific, the processing region ROI is displaced in the direction in which the road bends, in response to the change in road curvature. The larger the curvature of the road in front, the greater the amount of shift of the processing region ROI from the reference range. The region adjuster 28 may adjust the position of the processing region ROI in at least two stages of the reference range and a first range that is different from the reference range. The region adjuster 28 may also displace the processing region ROI in multiple stages of three or more stages or continuously, depending on the change in road shape.

As shown in FIG. 4B, the image processing unit 12 extracts, from the image IMG, the processing region ROI that has shifted from the reference range. By shifting the processing region ROI from the reference range in the direction in which the road bends, even when the shape of the road in front is curved, the occurrence of a situation where the oncoming vehicle 201 is located outside the processing region ROI can be restrained. Accordingly, the light spot image IMGa generated from this processing region ROI is likely to include two light spots 202 corresponding to lamps of the oncoming vehicle 201, as shown in FIG. 4C. Therefore, the oncoming vehicle 201 can be detected with high accuracy. As a result, as shown in FIG. 4D, the light distribution pattern PTN that includes the shading part 24 overlapping the oncoming vehicle 201 can be formed in front of the subject vehicle.

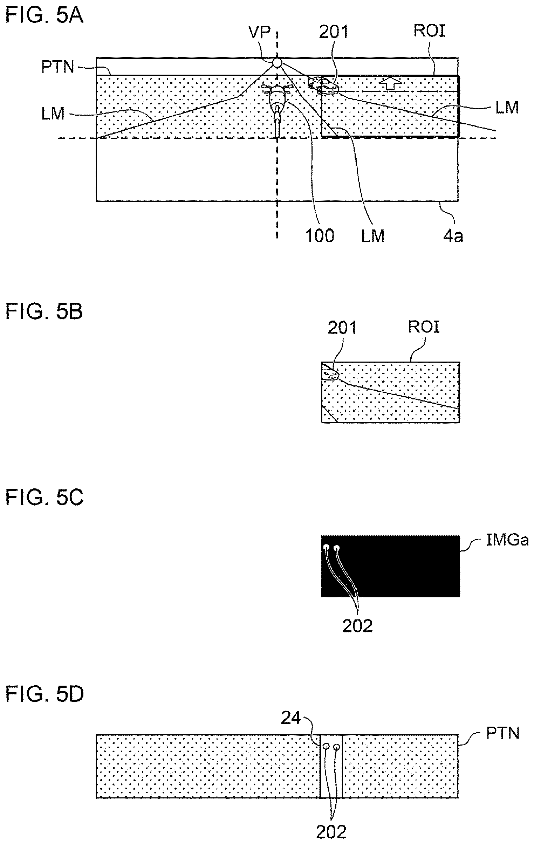

There will now be described the case of transforming the processing region ROI. FIG. 5A, FIG. 5B, FIG. 5C, and FIG. 5D are diagrams that illustrate transformation of the processing region ROI based on the road shape.

For example, it is assumed that the slope of the road in front has changed from the state where the shape of the road in front is the reference shape as shown in FIG. 2A to the state as shown in FIG. 5A. When the shape identification unit 30 has detected the change in road slope, the region adjuster 28 specifies the shape of the processing region ROI such that the overlap (area) of the region where the oncoming vehicle 201 is expected to appear and the processing region ROI on the sloped road is greater than when the processing region ROI is not adjusted. For example, the region adjuster 28 may retain a conversion table in advance in which the road slope and the shape of the processing region ROI are related to each other. The conversion table can be set as appropriate based on experiments and simulations conducted by the designer. Using this conversion table, the shape of the processing region ROI based on the change in road slope is identified. The region adjuster 28 transmits information on the shape of the processing region ROI to the region setting unit 26.

The region setting unit 26 transforms the processing region ROI into the shape specified by the region adjuster 28. Accordingly, the processing region ROI set in the reference range changes to the shape specified by the region adjuster 28. In specific, the processing region ROI is widened in the direction in which the road slopes, in response to the change in road slope. For example, when the road in front is uphill with respect to the road surface on which the subject vehicle 100 is located, at least part of the upper side of the processing region ROI is shifted upward. When the road in front is downhill, at least part of the lower side of the processing region ROI is shifted downward. The larger the difference between the slope of the road surface on which the subject vehicle 100 is located and the slope of the road in front, the greater the amount of expansion of the processing region ROI from the reference range. The region adjuster 28 may adjust the size of the processing region ROI in at least two stages of the reference range and a first range that is different from the reference range. The region adjuster 28 may also change the size of the processing region ROI in multiple stages of three or more stages or continuously, depending on the change in road shape.

As shown in FIG. 5B, the image processing unit 12 extracts, from the image IMG, the processing region ROI that has expanded from the reference range. By expanding the processing region ROI from the reference range in the direction in which the road slopes, even when the shape of the road in front is sloping, the occurrence of a situation where the oncoming vehicle 201 is located outside the processing region ROI can be restrained. Accordingly, the light spot image IMGa generated from this processing region ROI is likely to include two light spots 202 corresponding to lamps of the oncoming vehicle 201, as shown in FIG. 5C. Therefore, the oncoming vehicle 201 can be detected with high accuracy. As a result, as shown in FIG. 5D, the light distribution pattern PTN that includes the shading part 24 overlapping the oncoming vehicle 201 can be formed in front of the subject vehicle.

In the present embodiment, the processing region ROI for the oncoming vehicle 201 is displaced or transformed based on the shape of the road in front. When detecting a preceding vehicle, the detector 14 detects the preceding vehicle based on, as an example, a red light spot 202 within the processing region ROI. Accordingly, even if the processing region ROI includes white light spots 202 originating from the oncoming vehicle 201, streetlights, signs, and the like, such light spots 202 are unlikely to be misidentified as the preceding vehicle. Therefore, even if the processing region ROI for the preceding vehicle is set larger than the processing region ROI for the oncoming vehicle 201, the detection accuracy for the preceding vehicle can be maintained.

Meanwhile, when detecting the oncoming vehicle 201, the detector 14 detects the oncoming vehicle 201 based on, as an example, a white light spot 202 within the processing region ROI. Accordingly, if the processing region ROI includes white light spots 202 originating from street lights, signs, and the like, such light spots 202 may be misidentified as the oncoming vehicle 201. Therefore, it is desirable to narrow down the processing region ROI for the oncoming vehicle 201 to the region where the oncoming vehicle 201 is expected to appear for each road shape, if possible, as shown in FIG. 2A and the like. Accordingly, it is particularly effective to displace or transform the processing region ROI for the oncoming vehicle 201 based on a change in shape of the road in front. Naturally, the processing region ROI for a preceding vehicle may also be displaced or transformed based on a change in road shape, thereby improving the detection accuracy for the preceding vehicle.

Also, in the present embodiment, the processing region ROI is displaced when the curvature of the road in front changes. When the road curvature changes, the region where the oncoming vehicle 201 is expected to appear tends to be displaced in the direction in which the road bends while maintaining its size. Accordingly, by displacing the processing region ROI without transforming it, missed detection of the oncoming vehicle 201 can be restrained while false detection of the oncoming vehicle 201 is also restrained. Therefore, the detection accuracy for the oncoming vehicle 201 can be further improved.

Meanwhile, the processing region ROI is transformed when the slope of the road in front changes. When the road slope changes, the region where the oncoming vehicle 201 is expected to appear tends to expand in the direction in which the road slopes while including the range before the slope change. Accordingly, by transforming the processing region ROI without displacing it, missed detection of the oncoming vehicle 201 can be further restrained. Therefore, the detection accuracy for the oncoming vehicle 201 can be further improved.

The processing region ROI may be expanded in the direction in which the road bends in response to a change in road curvature, or the processing region ROI may be displaced in the direction in which the road slopes in response to a change in road slope. Also, both the position and the size of the processing region ROI may be changed. That is, the "displacement or transformation" in the present embodiment includes performing both displacement and transformation.

As a result of the vehicle detection described above, the light distribution control performed by the light distribution control device 8 will be as follows, at least temporarily. When the shape of the road in front is a predetermined first shape, the light distribution control device 8 sets the shading part 24 for a light spot 202 included in a first region of the image IMG. Meanwhile, the shading part 24 is not set for a light spot 202 included in a second region different from the first region. When the road shape is a second shape different from the first shape, the light distribution control device 8 sets or does not set the shading part 24 for a light spot 202 included in the first region. Meanwhile, the shading part 24 is set for a light spot 202 included in the second region.

For example, the first shape of a road may be the reference shape, and the second shape may be a curve. Also, the first region of the image IMG may be the reference range, and the second region may be a range in which the processing region ROI is set on a curved road. Accordingly, when the road has the reference shape, the processing region ROI is set in the first region (see FIG. 2A). Therefore, the shading part 24 is set for a light spot 202 included in the first region, and the shading part 24 is not set for a light spot 202 included in the second region, which is outside the first region. Meanwhile, when the road is curved, the processing region ROI is displaced from the first region to the second region (see FIG. 4A). Therefore, the shading part 24 is not set for a light spot 202 included in the first region, and the shading part 24 is set for a light spot 202 included in the second region. Depending on the road curvature, part of the range in which the processing region ROI is set on a curved road may overlap with the reference range. In this case, when the road shape is the second shape, the shading part 24 may also be set for a light spot 202 included in the first region.

Also, the first shape of a road may be the reference shape, and the second shape may be a sloped road, for example. The first region of the image IMG may be the reference range, and the second region may be a range in which the processing region ROI is set on a sloped road. Accordingly, when the road has the reference shape, the processing region ROI is set in the first region (see FIG. 2A). Therefore, the shading part 24 is set for a light spot 202 included in the first region, and the shading part 24 is not set for a light spot 202 included in the second region, which is outside the first region. Meanwhile, when the road is a sloped road, the processing region ROI expands to the second region (see FIG. 5A). Therefore, the shading part 24 is set for a light spot 202 included in the first region and a light spot 202 included in the second region.

There will now be described adjustment of the processing region ROI when the subject vehicle 100 tilts sideways. In addition to the displacement or deformation of the processing region ROI based on a change in road shape, the vehicle detection device 6 of the present embodiment transforms or displaces the processing region ROI based on a change in tilt angle (bank angle) of the vehicle's lateral axis with respect to a horizontal line. In specific, based on the tilt angle, the vehicle detection device 6 changes at least one of the region range of the processing region ROI in the vehicle's vertical direction or a region angle of the processing region ROI.

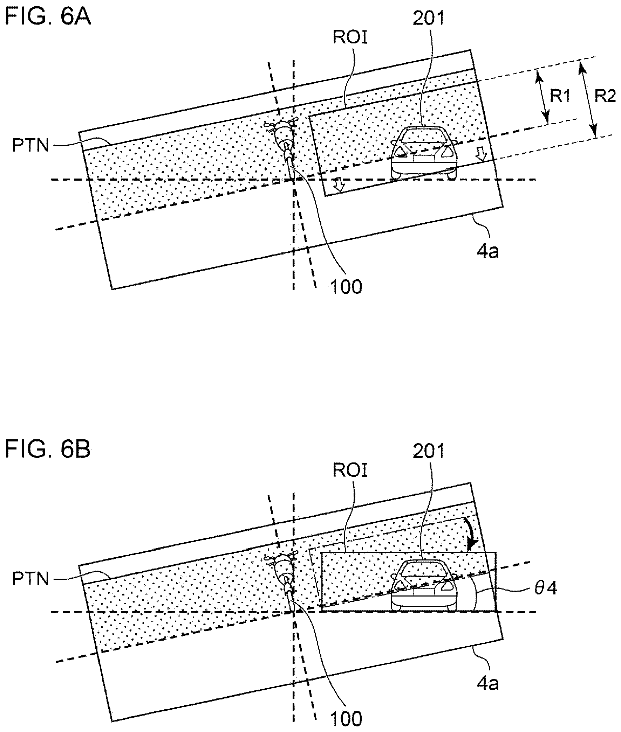

First, the transformation of the processing region ROI, or adjustment of the region range, will be described. FIG. 6A is a diagram that illustrates transformation of the processing region ROI based on the tilt of the subject vehicle 100. When the detection of the oncoming vehicle 201 within the processing region ROI is performed, a situation may arise in which the oncoming vehicle 201 cannot be detected when the posture of the subject vehicle 100 tilts to the left or right. That is, as shown in FIG. 6A, when the subject vehicle 100 tilts sideways, the imaging region 4a of the imaging device 4 mounted on the subject vehicle 100 also tilts sideways. In particular, when the subject vehicle 100 is a saddle riding type vehicle, it can bank significantly to the left or right while traveling. Therefore, the tilt of the imaging region 4a is also likely to become larger.

The image IMG obtained with the imaging region 4a tilted is an image tilted with respect to the ground. As described previously, since the range of the processing region ROI is associated with the pixel positions of the image IMG, the processing region ROI set for the tilted image IMG is also tilted with respect to the ground. When the processing region ROI is tilted, lamps of the oncoming vehicle 201 may be located outside the processing region ROI. As a result, a light spot image IMGa that does not include a light spot 202 may be generated, and missed detection of the oncoming vehicle 201 may occur. Similarly, when the object to be detected is a preceding vehicle, missed detection of the preceding vehicle may occur due to the tilt of the subject vehicle 100. Accordingly, the vehicle detection device 6 changes the region range of the processing region ROI in the vehicle's vertical direction, based on a change in tilt angle of the vehicle's lateral axis.

In specific, the region adjuster 28 acquires the measurement result transmitted from the posture sensor 10 to the vehicle detection device 6. Based on the measurement result thus acquired, the region adjuster 28 detects a change in tilt angle of the subject vehicle 100. Upon detection of a change in tilt angle of the subject vehicle 100, the region adjuster 28 transforms the processing region ROI so as to reduce the deviation of the processing region ROI from the region where the oncoming vehicle 201 or preceding vehicle is expected to appear. When the tilt angle of the lateral axis of the subject vehicle 100 with respect to a horizontal line is a first angle, the region range of the processing region ROI in the vehicle's vertical direction, i.e., the region range in the image's vertical direction, is a first range R1. When the subject vehicle 100 tilts sideways and the tilt angle of the lateral axis with respect to the horizontal line becomes a second angle that is greater than the first angle, the region adjuster 28 sets the region range in the vehicle's vertical direction to a second range R2 that is greater than the first range R1, as shown in FIG. 6A. For example, the region adjuster 28 displaces the upper side of the processing region ROI upward, displaces the lower side thereof downward, or performs both. Preferably, the adjustment of the region range includes displacing the lower side of the processing region ROI.

For example, the region adjuster 28 may retain a threshold of the tilt angle of the vehicle's lateral axis in advance and extend, when the tilt angle of the subject vehicle 100 exceeds the threshold, the region range of the processing region ROI from the first range R1 to the second range R2. The threshold can be set as appropriate based on experiments and simulations conducted by the designer. The region adjuster 28 may extend part of the upper side of the processing region ROI upward or may extend part of the lower side of the processing region ROI downward.

By making the processing region ROI relatively small when the tilt angle of the subject vehicle 100 is relatively small and making the processing region ROI relatively large when the tilt angle is relatively large, even when the subject vehicle 100 tilts sideways, the occurrence of a situation where a vehicle in front is located outside the processing region ROI can be restrained. Therefore, the detection accuracy for a vehicle in front can be improved. Also, compared to the case where vehicle detection is performed using a large processing region ROI by default regardless of the tilt angle of the subject vehicle 100, the processing load on the vehicle detection device 6 can be reduced. In addition, the occurrence of a situation in which a light spot 202 that does not originate from a vehicle in front is falsely judged to be the vehicle in front can be restrained.

The region adjuster 28 may adjust the region range in at least two stages depending on the change in tilt angle of the vehicle's lateral axis. The region adjuster 28 may also change the region range in multiple stages of three or more stages or continuously.

There will now be described the displacement of the processing region ROI, or adjustment of the region angle. FIG. 6B is a diagram that illustrates displacement of the processing region ROI based on the tilt of the subject vehicle 100. As shown in FIG. 6B, when the subject vehicle 100 tilts sideways, the image IMG and the processing region ROI also tilt. When the processing region ROI tilts, missed detection of the oncoming vehicle 201 or preceding vehicle may occur. Accordingly, the vehicle detection device 6 changes the region angle of the processing region ROI based on a change in tilt angle of the vehicle's lateral axis. The region angle of the processing region ROI is an angle around the vehicle's longitudinal axis, or an angle around the imaging axis of the imaging device 4. It may also be an angle with respect to the vehicle's lateral axis, such as the angle between the upper side or the lower side of the processing region ROI and the vehicle's lateral axis.

Upon detection of a change in tilt angle of the subject vehicle 100, the region adjuster 28 displaces the processing region ROI so as to reduce the deviation of the processing region ROI from the region where the oncoming vehicle 201 or preceding vehicle is expected to appear. When the tilt angle of the lateral axis of the subject vehicle 100 with respect to a horizontal line is a first angle, the region angle of the processing region ROI is a third angle θ3 as shown in FIG. 2A. When the subject vehicle 100 tilts sideways and the tilt angle of the lateral axis with respect to the horizontal line becomes a second angle that is greater than the first angle, the region adjuster 28 changes the region angle of the processing region ROI from the third angle θ3 to a fourth angle θ4, as shown in FIG. 6B. The turning direction of the processing region ROI is opposite to the direction in which the subject vehicle 100 tilts. In specific, when the subject vehicle 100 tilts to the left as shown in FIG. 6B, the processing region ROI is tilted to the right (i.e., turned clockwise). When the subject vehicle 100 tilts to the right, on the other hand, the processing region ROI is tilted to the left (i.e., turned counterclockwise).

For example, the region adjuster 28 may retain a threshold of the tilt angle of the vehicle's lateral axis in advance. When the tilt angle of the subject vehicle 100 exceeds the threshold, the region angle of the processing region ROI is changed from the third angle θ3 to the fourth angle θ4. The threshold can be set as appropriate based on experiments and simulations conducted by the designer. The region adjuster 28 may change an angle of a portion of the processing region ROI. By displacing the processing region ROI from the third angle θ3 to the fourth angle θ4 with respect to the vehicle's lateral axis, even when the subject vehicle 100 tilts sideways, the occurrence of a situation where a vehicle in front is located outside the processing region ROI can be restrained. Therefore, the detection accuracy for a vehicle in front can be improved.

The region adjuster 28 may adjust the region angle in at least two stages depending on the change in tilt angle of the vehicle's lateral axis. The region adjuster 28 may also change the region angle in multiple stages of three or more stages or continuously. Also, the region adjuster 28 may change both the region range and the region angle of the processing region ROI.

The subject vehicle 100 on which the vehicle detection device 6 of the present embodiment is mounted is a saddle riding type vehicle. Compared to a general four-wheeled vehicle, the vehicle's lateral axis of a saddle riding type vehicle is likely to tilt more significantly. Therefore, displacing or transforming the processing region ROI based on the tilt angle of the subject vehicle 100 is particularly effective for a saddle riding type vehicle. The subject vehicle 100 may also be a vehicle other than a saddle riding type vehicle, such as a four-wheeled vehicle.

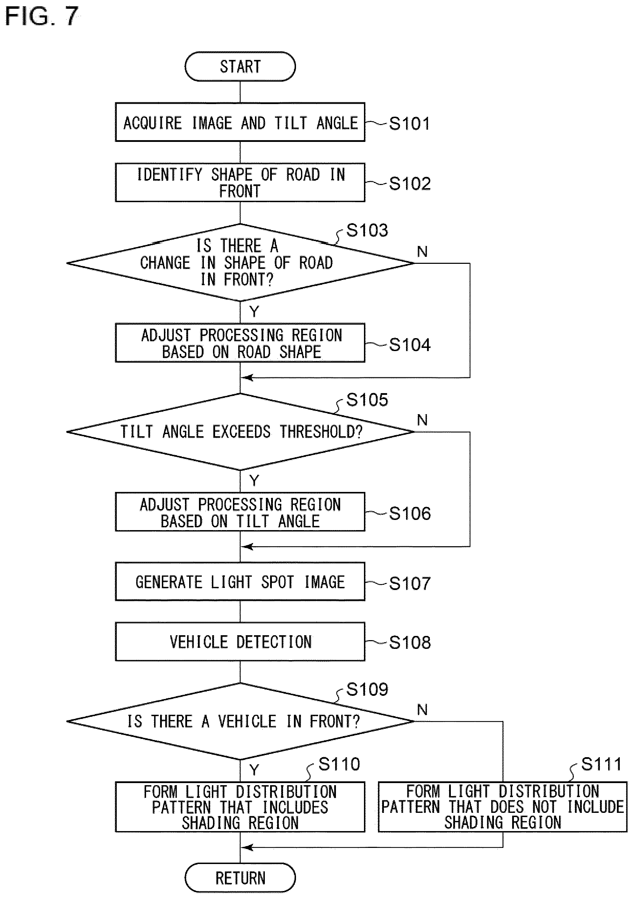

FIG. 7 is a flowchart that shows an example of control performed by the vehicle detection device 6 and the light distribution control device 8. The processing in this flowchart is repeatedly performed at predetermined timing when, for example, an instruction to perform ADB control is provided by means of a light switch, which is not illustrated, and, in addition, the ignition switch has been turned on.

First, the vehicle detection device 6 acquires an image IMG from the imaging device 4 and also acquires the tilt angle of the subject vehicle 100 from the posture sensor 10 (S101). The vehicle detection device 6 then identifies the shape of the road in front from the image IMG (S102). Subsequently, the vehicle detection device 6 judges whether there is a change in shape of the road in front (S103). When there is a change in road shape (Y at S103), the vehicle detection device 6 adjusts the processing region ROI based on the shape of the road in front (S104) and proceeds to the step S105. When there is no change in road shape (N at S103), the vehicle detection device 6 proceeds to the step S105 without adjusting the processing region ROI.

Thereafter, the vehicle detection device 6 judges whether the tilt angle of the lateral axis of the subject vehicle 100 exceeds a threshold (S105). When the tilt angle exceeds the threshold (Y at S105), the vehicle detection device 6 adjusts the processing region ROI based on the tilt angle (S106) and proceeds to the step S107. When the tilt angle is less than or equal to the threshold (N at S105), the vehicle detection device 6 proceeds to the step S107 without adjusting the processing region ROI.

Thereafter, the vehicle detection device 6 extracts the processing region ROI from the image IMG and generates a light spot image IMGa from the processing region ROI (S107). The vehicle detection device 6 then performs vehicle detection using the light spot image IMGa thus generated (S108) and judges, from the result of the vehicle detection, whether there is a vehicle in front (S109). When there is a vehicle in front (Y at S109), the light distribution control device 8 controls the light distribution variable lamp 2 to form a light distribution pattern PTN that includes the shading part 24 (S110), and this routine is terminated. When there is no vehicle in front (N at S109), the light distribution control device 8 controls the light distribution variable lamp 2 to form a light distribution pattern PTN that does not include the shading part 24 (S111), and this routine is terminated.

As described above, the vehicle detection device 6 according to the present embodiment performs detection of a vehicle in front within the processing region ROI set in the image IMG. In the present embodiment, the processing region ROI is converted into the light spot image IMGa before the vehicle detection is performed. In this way, by narrowing down the object in which the vehicle detection is performed to the processing region ROI, the load on the vehicle detection device 6 can be reduced compared to the case where the vehicle detection is performed in the entire image IMG. Also, the vehicle detection device 6 performs at least one of displacement or transformation of the processing region ROI in response to a change in shape of the road in front. Thus, by dynamically adjusting the processing region ROI based on the road shape, overlooking of a vehicle in front can be restrained. Therefore, the detection accuracy for a vehicle in front can be improved.

Also, the light distribution control device 8 according to the present embodiment determines the light distribution pattern PTN that includes the shading part 24 overlapping a vehicle in front, based on the detection result from the vehicle detection device 6. This enables reduction of glare provided to the driver of the vehicle in front and improvement of visibility from the driver of the subject vehicle 100, with higher accuracy. Therefore, the safety of vehicle operation can be improved.

An embodiment of the present invention has been described in detail. The abovementioned embodiment merely describes a specific example for carrying out the present invention. The embodiment is not intended to limit the technical scope of the present invention, and various design modifications, including changes, addition, and deletion of constituting elements, may be made to the embodiment without departing from the spirit of the invention defined in the claims. Such an additional embodiment with a design modification added has the effect of each of the combined embodiment and modification. In the aforementioned embodiment, matters to which design modifications may be made are emphasized with the expression of "of the present embodiment", "in the present embodiment", or the like. However, design modifications may also be made to matters without such expression. Optional combinations of the abovementioned constituting elements are also effective as embodiments of the present invention. Also, the hatching provided on the cross sections in the drawings does not limit the materials of the objects with the hatching.

The invention according to the abovementioned embodiment may be defined by the following Items.

### Item 1

A vehicle detection device (6)
that performs detection of a vehicle in front within a processing region (ROI) set in an image (IMG) based on an imaging device (4) that captures an image of an area in front,
and that displaces or transforms the processing region (ROI) based on a change in shape of a road in front.

### Item 2

The vehicle detection device (6) according to Item 1 that detects the change in shape of the road based on transformation of a lane demarcation line (LM) provided on the road surface.

### Item 3

The vehicle detection device (6) according to Item 1 or Item 2 that detects the change in shape of the road based on displacement of a vanishing point (VP) in the image (IMG).

### Item 4

The vehicle detection device (6) according to any one of Item 1 through Item 3 that displaces the processing region (ROI) in a direction in which the road bends, based on a change in road curvature.

### Item 5

The vehicle detection device (6) according to any one of Item 1 through Item 4 that expands the processing region (ROI) in a direction in which the road slopes, based on a change in road slope.

### Item 6

The vehicle detection device (6) according to any one of Item 1 through Item 5 that changes at least one of a region range of the processing region (ROI) in a vehicle's vertical direction or a region angle of the processing region (ROI), based on a change in tilt angle of the vehicle's lateral axis.

### Item 7

The vehicle detection device (6) according to any one of Item 1 through Item 6, wherein, when the shape of the road is a straight line, the processing region (ROI) is set on the opposite traffic lane side with respect to the middle in a vehicle width direction of the subject vehicle and is used to detect an oncoming vehicle (201).

### Item 8

A light distribution control device (8) that determines a light distribution pattern (PTN) including a shading part (24) in a region corresponding to a vehicle in front, based on a detection result from the vehicle detection device (6) according to any one of Item 1 through Item 7.

### Item 9

A vehicle detection method, including:
performing detection of a vehicle in front within a processing region (ROI) set in an image (IMG) based on an imaging device (4) that captures an image of an area in front; and
displacing or transforming the processing region (ROI) based on a change in shape of a road in front.

### Item 10

A light distribution control device (8) that determines a light distribution pattern (PTN) including a shading part (24) using an image (IMG) based on an imaging device (4) that captures an image of an area in front,
wherein, when the shape of a road in front is a predetermined first shape, the light distribution control device (8) sets the shading part (24) for a light spot (202) included in a first region of the image (IMG) and does not set the shading part (24) for a light spot (202) included in a second region different from the first region, and
wherein, when the shape of the road is a second shape different from the first shape, the light distribution control device (8) sets or does not set the shading part (24) for a light spot (202) included in the first region and sets the shading part (24) for a light spot (202) included in the second region.

### INDUSTRIAL APPLICABILITY

The present invention relates to a vehicle detection device, a light distribution control device, and a vehicle detection method.

### REFERENCE SIGNS LIST

1 vehicular lamp system, 2 light distribution variable lamp, 4 imaging device, 6 vehicle detection device, 8 light distribution control device, 24 shading part, 201 oncoming vehicle, LM lane demarcation line, ROI processing region, VP vanishing point

## Claims

1. A vehicle detection device
that performs detection of a vehicle in front within a processing region set in an image based on an imaging device that captures an image of an area in front,
and that displaces or transforms the processing region based on a change in shape of a road in front.

2. The vehicle detection device according to Claim 1 that detects the change in shape of the road based on transformation of a lane demarcation line.

3. The vehicle detection device according to Claim 1 or 2 that detects the change in shape of the road based on displacement of a vanishing point in the image.

4. The vehicle detection device according to Claim 1 or 2 that displaces the processing region in a direction in which the road bends, based on a change in road curvature.

5. The vehicle detection device according to Claim 1 or 2 that expands the processing region in a direction in which the road slopes, based on a change in road slope.

6. The vehicle detection device according to Claim 1 or 2 that changes at least one of a region range of the processing region in a vehicle's vertical direction or a region angle of the processing region, based on a change in tilt angle of the vehicle's lateral axis.

7. The vehicle detection device according to Claim 1 or 2, wherein, when the shape of the road is a straight line, the processing region is set on the opposite traffic lane side with respect to the middle in a vehicle width direction of the subject vehicle and is used to detect an oncoming vehicle.

8. A light distribution control device that determines a light distribution pattern including a shading part in a region corresponding to a vehicle in front, based on a detection result from the vehicle detection device according to Claim 1 or 2.

9. A vehicle detection method, comprising:
performing detection of a vehicle in front within a processing region set in an image based on an imaging device that captures an image of an area in front; and
displacing or transforming the processing region based on a change in shape of a road in front.

10. A light distribution control device that determines a light distribution pattern including a shading part using an image based on an imaging device that captures an image of an area in front,
wherein, when the shape of a road in front is a predetermined first shape, the light distribution control device sets the shading part for a light spot included in a first region of the image and does not set the shading part for a light spot included in a second region different from the first region, and
wherein, when the shape of the road is a second shape different from the first shape, the light distribution control device sets or does not set the shading part for a light spot included in the first region and sets the shading part for a light spot included in the second region.
